Europäisches Patentamt

European Patent Office

Office européen des brevets

(19)

(11) Numéro de publication : **0 032 477**
**B1**

# (12) FASCICULE DE BREVET EUROPÉEN

(45) Date de publication du fascicule du brevet :
02.05.84

(51) Int. Cl.³ : **B 60 R 21/10**

(21) Numéro de dépôt : **81420004.4**

(22) Date de dépôt : **09.01.81**

(54) **Butée de tension pour ceinture de sécurité du type à enrouleur.**

(30) Priorité : **11.01.80 FR 8000867**

(43) Date de publication de la demande :
**22.07.81 Bulletin 81/29**

(45) Mention de la délivrance du brevet :
**02.05.84 Bulletin 84/18**

(84) Etats contractants désignés :
**AT BE CH DE GB IT LI LU NL SE**

(56) Documents cités :
**CH-A- 595 228**
**DE-A- 2 556 497**
**DE-A- 2 635 349**
**DE-A- 2 805 588**
**GB-A- 1 014 353**
**US-A- 3 494 571**

(73) Titulaire : **Alix, Maurice Alain Jean**
**Ecole des Métiers E.D.F.**
**Gurcy-le-Chatel F-77520 Donnemarie-Dontilly (FR)**

(72) Inventeur : **Alix, Maurice Alain Jean**
**Ecole des Métiers E.D.F.**
**Gurcy-le-Chatel F-77520 Donnemarie-Dontilly (FR)**

(74) Mandataire : **Ropital-Bonvarlet, Claude et al**
**Cabinet BEAU DE LOMENIE 99, Grande rue de la**
**Guillotière**
**F-69007 Lyon (FR)**

Jouve, 18, rue St-Denis, 75001 Paris, France

Butée de tension pour ceinture de sécurité du type à enrouleur

La présente invention est relative aux organes accessoires pour ceintures de sécurité généralement mises en place dans les véhicules, principalement les véhicules automobiles, et elle concerne, plus particulièrement, les organes accessoires de ceintures de sécurité du type à enrouleur.

Dans le domaine technique ci-dessus, on sait que par mesure de sécurité, il est fréquent, sinon obligatoire, de munir les habitacles de véhicules, tels que les automobiles, les aéronefs, etc..., de ceintures de sécurité du type à enrouleur automatique. Ces ceintures de sécurité, notamment pour ce qui concerne les véhicules automobiles, sont du type dit à trois points, c'est-à-dire comprenant un point d'ancrage ou de renvoi haut, généralement dénommé $F_1$, un second point d'ancrage bas, généralement dénommé $F_2$, et un autre point d'accrochage bas dénommé $F_3$. Le dispositif enrouleur ou rétracteur peut être prévu au niveau du point supérieur $F_1$ ou du point inférieur $F_2$ indifféremment.

Une telle disposition permet d'utiliser une ceinture de sécurité d'une seule longueur qui est amenée, après l'accrochage, au niveau du point $F_3$, à former deux brins passant devant le corps d'un utilisateur occupant le siège ainsi équipé en formant un premier brin, dénommé sous-abdominal, reliant le point $F_2$ au point $F_3$, et un brin dénommé thoracique, reliant le point $F_1$ au point $F_3$.

La ceinture de sécurité du type ci-dessus est normalement mise sous tension constante par l'enrouleur ou rétracteur, de manière à plaquer les brins sous-abdominal et thoracique sur le corps de l'utilisateur.

De telles ceintures de sécurité donnent généralement satisfaction car elles réalisent un maintien convenable du corps d'un utilisateur sur le siège qu'il occupe et s'opposent avec efficacité à la projection en avant en cas de choc en combinaison avec un dispositif de blocage à inertie.

Il y a lieu de noter, toutefois, que de telles ceintures ne sont pas entièrement satisfaisantes pour certains utilisateurs, étant donné que l'action de l'enrouleur automatique ou du rétracteur maintient une tension constante sur le brin thoracique entre le point $F_1$ et le point $F_3$ au moins. Une telle tension a pour effet d'assurer une application avec pression, certes minime, mais néanmoins constante, du brin thoracique sur la poitrine de l'utilisateur. Selon la morphologie de ce dernier, ou sa conformation, une telle contrainte par pression peut devenir insupportable au point de conduire l'usager à commander délibérément l'ouverture de la ceinture de sécurité pour mettre fin à une telle pression constante insupportable. Il est évident que ce faisant, l'utilisateur supprime toute mesure de sécurité résultant normalement de la mise en place d'une telle ceinture et encourt, par suite, des risques d'accident corporel en cas de choc.

Pour tenter de résoudre ce problème, on a proposé un certain nombre de dispositifs. Parmi ceux-ci, il faut citer les pinces à branches articulées qui sont serrées pour être immobilisées sur la ceinture, comme enseigné par la demande DE-A-25 56 497. La pince représente alors une butée susceptible de s'opposer à l'action de rappel de l'enrouleur. De tels dispositifs ne sont pas satisfaisants pour deux raisons. La première est que, dans son état ouvert, la pince n'est pas retenue sur la ceinture. Pour éviter la perte, l'utilisateur est donc astreint à prévoir un emplacement de rangement pour y déposer la pince en dehors de la mise en service. Ceci n'est pas favorable à une utilisation rationnelle et impose, le plus souvent, à l'utilisateur une phase de recherche et de manipulation préalablement à une mise en service. La seconde est qu'il n'est pas possible, généralement, de régler le pincement, de sorte qu'un glissement de la pince peut résulter, soit d'une usure, soit d'une moindre épaisseur de la ceinture. Un tel inconvénient s'oppose à une mise en service efficace pour le but recherché.

On a proposé, aussi, des dispositifs faisant intervenir un organe de blocage placé dans une lumière et formé par un rouleau excentrique manœuvrable manuellement, comme enseigné par la demande FR-A-2 358 166. De tels dispositifs ne connaissent pas le premier inconvénient cité. Cependant, il s'avère que leur mise en œuvre, par une seule main, n'est pas pratique. En particulier, il est parfois, voire souvent, difficile, sinon impossible, de commander une rotation angulaire partielle suffisante du rouleau excentré pour obtenir un pincement suffisant de la ceinture pour éviter tout glissement.

On a proposé, également, un dispositif comprenant, comme décrit par le brevet CH-A-595 228, une pièce en forme de cadre traversée par la ceinture et dans lequel est disposée, de façon à pouvoir se déplacer perpendiculairement au plan de la ceinture, une pièce en forme de traverse associée à une came de commande entraînée en rotation par un bouton porté par le cadre.

Une telle réalisation n'est pas satisfaisante car elle fait intervenir cinq pièces distinctes qui doivent être assemblées lors du montage dans un ordre déterminé. En outre, l'amplitude de serrage est directement fonction du profil de la came présenté par une pièce de faible diamètre, ne permettant pas d'exercer un couple de serrage suffisant. Par ailleurs, la came est placée entre la traverse et le cadre et se trouve ainsi soumise à des frottements qui réduisent encore l'effet de serrage de la ceinture susceptible d'être obtenu par une action sur le bouton de commande.

L'objet de l'invention est de remédier aux inconvénients ci-dessus en proposant un dispositif accessoire pouvant être adapté sur une ceinture de sécurité, de manière à supprimer l'effet de contrainte ou de pression constante appliquée sur la poitrine de l'utilisateur par le brin thoracique, sans pour autant supprimer les avantages de sécurité inhérents à la constitution des ceintures du type de celles ci-dessus.

Pour atteindre ce résultat, l'objet de l'invention est constitué de manière à représenter une butée de tension amovible, à position réglable, pouvant être adaptée sur le brin thoracique, de manière à être amenée, par l'effet de traction résultant de l'action de l'enrouleur ou du rétracteur, à coopérer avec le guichet de renvoi proche du point d'ancrage $F_1$ et qui peut être constitué par un simple anneau ou, au contraire, par une fenêtre de passage prévue dans la paroi latérale de l'habitacle lorsque le dispositif d'enroulement ou de rétraction est du type encastré ou dissimulé.

L'objet de l'invention est conçu de manière à être d'un maniement pratique, rapide, sûr et efficace pour autoriser une mise en place ou un retrait d'une seule main ainsi, éventuellement, qu'un réglage de position même en cours de conduite.

L'objet de l'invention est, par ailleurs, conçu de manière particulièrement simple et robuste, de manière à pouvoir faire l'objet d'une fabrication en grande série permettant une commercialisation à bon marché.

Un autre objet de l'invention réside dans le fait que sa conception est choisie pour éviter tout risque de traumatisme ou de blessure volontaire ou involontaire, quelle que soit la position du dispositif sur la ceinture de sécurité.

Par rapport au brevet CH-A-595 228 qui décrit déjà une butée de tension pour ceinture de sécurité du type à enrouleur comprenant, d'une part, une pièce de support délimitant un couloir de passage pour une ceinture et, d'autre part, une pièce de blocage mobile susceptible de dégager totalement le couloir de passage ou de pénétrer dans ce dernier pour pincer et serrer la ceinture contre la pièce de support, la butée selon l'invention est caractérisée en ce que

— la pièce de support est constituée sous la forme d'un « U » comprenant une embase et deux bords relevés délimitant avec l'embase le couloir de passage, lesdits rebords étant munis de moyens de retenue et de guidage de la pièce de blocage,

— la pièce de blocage est constituée par une plaquette comportant :

des moyens complémentaires des moyens de retenue et de guidage,

une face d'appui, de serrage et de pincement orientée en direction de l'embase,

une face opposée à la face d'appui et munie d'un organe d'actionnement.

Diverses autres caractéristiques ressortent de la description ci-dessous faite en référence aux dessins annexés, qui montrent, à titre d'exemples non limitatifs, des formes de réalisation de l'objet de l'invention.

La figure 1 est une perspective illustrant une forme de réalisation du dispositif selon l'invention.

La figure 2 est une vue en plan correspondant à la fig. 1.

Les figures 3 et 4 sont des coupes prises respectivement selon les lignes III-III et IV-IV de la fig. 2.

La figure 5 est un schéma montrant l'adaptation de la butée sur une ceinture de sécurité.

La figure 6 est une perspective illustrant une autre forme de réalisation du dispositif.

La figure 7 est une coupe prise selon la ligne VII-VII de la fig. 6.

La figure 8 est une vue en plan, partie en coupe, prise selon la ligne VIII-VIII de la fig. 7.

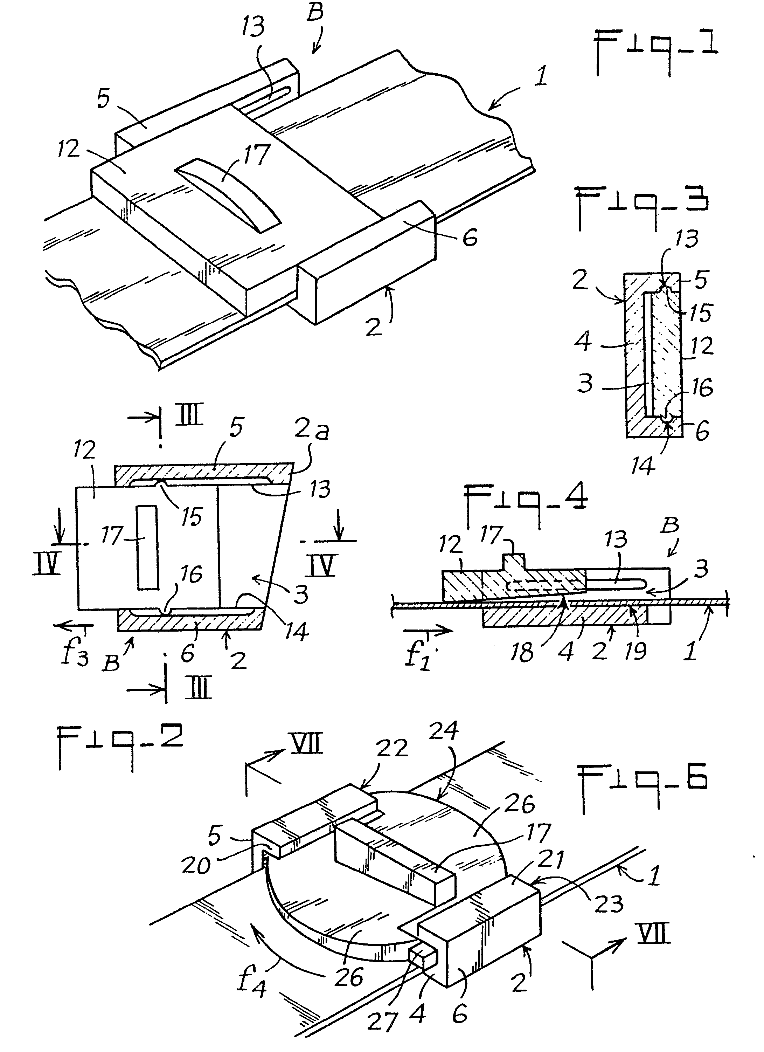

Selon l'exemple de réalisation illustré par la fig. 1, la butée de tension B pour ceinture de sécurité du type à enrouleur, telle que celle partiellement représentée et désignée par la référence 1, comprend une pièce de support 2 qui délimite un couloir 3 de passage pour la ceinture 1. La pièce de support 2 présente en section la forme d'un « U » délimité par une embase 4 prolongée par deux bords relevés 5 et 6.

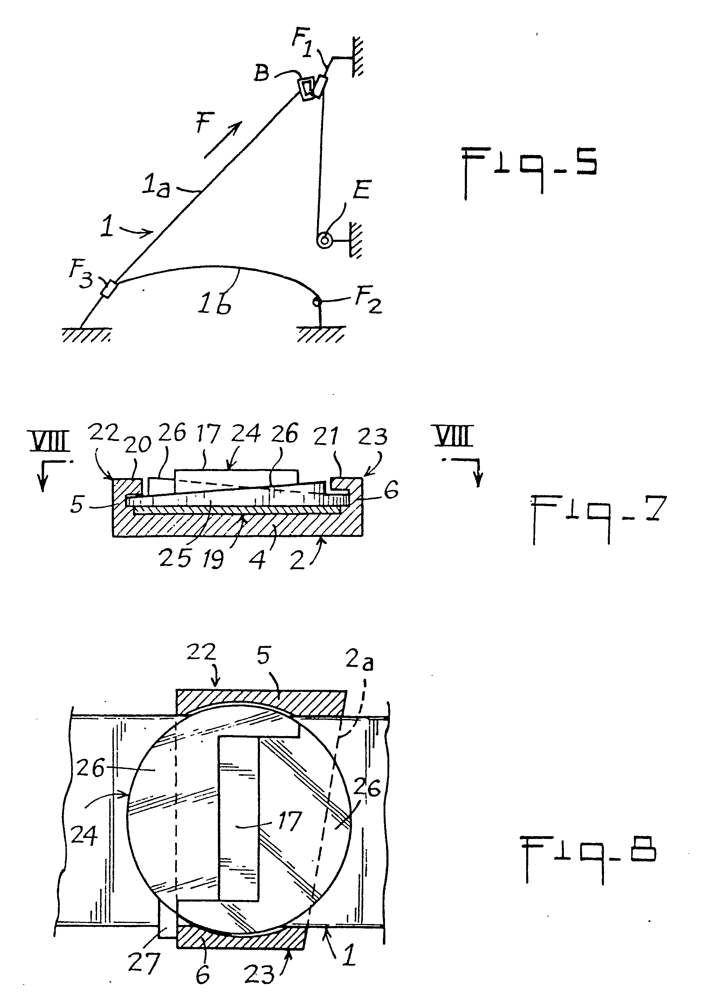

La pièce de support 2 est associée à une pièce de blocage 12, constituée sous la forme d'un coulisseau destiné à être guidé en coulissement entre les faces en regard des bords 5 et 6. Les fig. 2 et 4 montrent que les faces en regard des bords 5 et 6 comportent des rainures 13 et 14, à extrémités fermées, parallèles à la direction de coulissement de la ceinture et destinées à recevoir des saillies ou protubérances complémentaires 15 et 16 qui sont formées par les côtés longitudinaux du coulisseau 12. Le montage du coulisseau dans le couloir 3 s'effectue par déformation élastique pour provoquer le passage des bossages 15 et 16 par rapport aux extrémités fermées et assurer l'engagement de ces bossages dans les rainures 13 et 14.

Le coulisseau 12 comporte sur sa face supérieure un moyen d'actionnement 17 qui peut être formé en creux ou en saillie. A l'opposé de l'organe d'actionnement 17, le coulisseau 12 comporte une face inférieure 18 présentant, par rapport au fond 19 du couloir 3, une inclinaison convergente vers la face supérieure, de manière que le bord de moindre épaisseur du coulisseau pénètre en premier, selon la flèche $f_1$, dans la pièce de support, en vue du blocage de la ceinture.

Après mise en place du coulisseau 12 dans la pièce de support, comme dit ci-dessus, un déplacement du coulisseau dans le sens de la flèche $f_3$ provoque le dégagement vertical de la face 18 par rapport au fond 19 du couloir 3 et, par conséquent, une augmentation de la section de passage de ce dernier pour le libre coulissement de la ceinture 1. Par contre, lorsque l'utilisateur provoque le déplacement du coulisseau 12 dans le sens inverse à celui de la flèche $f_3$, la face 18 est amenée à réduire progressivement la section de passage du couloir 3 et, par conséquent, à pincer et serrer la ceinture 1 sur laquelle la butée B est ainsi immobilisée.

La fig. 5 montre que la butée de tension B est montée sur le brin thoracique 1a entre le point supérieur d'ancrage ou de renvoi $F_1$ et le point d'ancrage $F_3$ à partir duquel la ceinture 1 forme un brin sous-abdominal 1b reliant ledit point $F_3$ au second point d'ancrage bas $F_2$. Selon ce schéma, la ceinture 1 est montée sur un enrouleur E qui tend à maintenir au moins le brin thoracique 1a sous une tension F que la butée de tension vise à combattre. Dans ce but, l'utilisateur exerce une action de traction sur le brin thoracique 1a dans le sens contraire à la flèche F, de manière à conférer au brin thoracique un relâchement de tension permettant de régler et d'immobiliser la butée B sur le brin thoracique à proximité du point d'ancrage supérieur ou de renvoi $F_1$. Lorsque l'utilisateur relâche son action sur le brin thoracique 1a, l'enrouleur E agit de nouveau pour appliquer la tension selon la flèche F, de sorte que la butée de tension est amenée contre le point d'ancrage ou de renvoi supérieur $F_1$ sur lequel il prend appui par l'action constante de l'enrouleur E. Il en résulte que le brin 1a n'est plus soumis à la tension F et libère, par conséquent, l'usager de la pression et contrainte normalement appliquées de façon constante au niveau de la poitrine, sans qu'une modification quelconque soit apportée au dispositif de blocage à inertie non représenté chargé d'immobiliser la ceinture en cas de choc.

En règle générale, le point de renvoi ou d'ancrage supérieur $F_1$ est situé tout au plus en alignement avec le dossier du siège d'un véhicule, de sorte que la mise en place de la ceinture se traduit par une inflexion de cette dernière à proximité du point $F_1$. De manière à obtenir un appui convenable de la butée de tension B sur le point $F_1$, il est prévu de conférer, au moins à la pièce de support 2, un bord transversal 2a incliné par rapport à la perpendiculaire à l'axe de déplacement relatif de la ceinture dans le couloir 3. Ce bord incliné 2a est prévu pour qu'en position d'utilisation pour un usager conducteur d'un véhicule à poste de conduite à gauche, le bord 5, dirigé vers l'arrière du véhicule, présente une longueur supérieure à celle du bord relevé 6 orienté vers l'avant. De cette manière, l'appui de la butée s'effectue sur toute la mesure transversale disponible de la pièce 2 et maintient, de la sorte, les conditions optimales de passage de la ceinture 1 au niveau du point de renvoi ou d'ancrage $F_1$.

Le dispositif décrit ci-dessus est de préférence réalisé en matière plastique et peut, de ce fait, être fabriqué à un prix de revient intéressant en conférant à la butée de tension des caractéristiques de résistance et de fiabilité particulièrement élevées.

Il y a lieu de remarquer que la conception de la butée ne fait intervenir aucune pièce saillant de façon agressive, de sorte qu'aucun risque de blessure intempestive ne peut résulter de la mise en place d'une telle butée sur une ceinture de sécurité.

Une variante de réalisation de la butée de tension est illustrée par les fig. 6 à 8. Dans cette variante, la pièce de support 2 comporte les bords relevés 5 et 6 qui sont cette fois prolongés par des rebords 20 et 21 s'étendant parallèlement à l'embase 4 en direction l'un de l'autre. Les rebords 20 et 21 délimitent ainsi des guides 22 et 23 avec lesquels coopère une plaquette circulaire 24 engagée et retenue entre les guides, de manière à présenter une face plane 25 parallèlement au fond 19 du couloir 3. La face supérieure de la plaquette 24 comporte, de part et d'autre d'un moyen d'actionnement 17, deux rampes inclinées 26 conférant à la plaquette 24 une épaisseur croissant progressivement dans le même sens angulaire.

Dans la position représentée, la plaquette 24 confère une hauteur maximale au couloir de passage 3, de sorte qu'un coulissement relatif libre de la butée par rapport à la ceinture 1 en résulte.

Lorsque la plaquette 24 est tournée dans le sens de la flèche $f_4$, les rampes 26 coopèrent avec les rebords 20 et 21 des bords 5 et 6 et provoquent le déplacement descendant de la plaquette sur son axe de rotation avec rapprochement de la face 25 par rapport au fond 19 du couloir 3. Il en résulte un pincement et un serrage de la ceinture 1 et une immobilisation de la butée B sur cette dernière.

Il peut être avantageusement prévu de faire venir à la périphérie de la plaquette 24 une butée 27 destinée à coopérer avec l'un au moins des rebords 5 ou 6 pour immobiliser ladite plaquette dans une position de dégagement maximale par rapport à la section du couloir de passage 3.

Comme dans l'exemple précédent, la pièce de support 2 peut avantageusement comporter un bord incliné 2a. De même, il peut être prévu de conférer au fond 19, ainsi qu'à la face 25 un état de surface introduisant, au moment du serrage, un coefficient de friction améliorant l'immobilisation et le blocage relatif de la butée sur la ceinture 1.

## Revendications

1. Butée de tension pour ceinture de sécurité du type à enrouleur comprenant, d'une part, une pièce de support (2) délimitant un couloir de passage (3) pour une ceinture (1) et, d'autre part, une pièce de blocage (12) mobile susceptible de dégager totalement le couloir de passage ou de pénétrer dans ce dernier pour pincer et serrer la ceinture contre la pièce de support, caractérisé en ce que :

— la pièce de support (2) est constituée sous la forme d'un « U » comprenant une embase (4) et deux bords relevés (5-6) délimitant avec l'embase le couloir de passage (3), lesdits rebords étant munis de moyens (13-14 ou 22-23) de retenue et de guidage de la pièce de blocage (12),

— la pièce de blocage est constituée par une plaquette (12) comportant :

des moyens (15-16 ou 26) complémentaires des moyens (13-14 ou 22-23) de retenue et de guidage,

une face (18 ou 25) d'appui, de serrage et de pincement orientée en direction de l'embase,

une face opposée à la face d'appui et munie d'un organe d'actionnement (17).

2. Butée de tension selon la revendication 1, caractérisée en ce que la pièce de support (2) délimite un couloir (3) comportant, au moins au niveau de l'embase, un état de surface introduisant un coefficient de friction par rapport à la matière constitutive de la ceinture.

3. Butée de tension selon la revendication 1 ou 2, caractérisée en ce que la pièce de support (2) comporte, pour l'appui contre le guichet de passage de la ceinture (1), un bord transversal (2a) incliné par rapport à la perpendiculaire à l'axe de coulissement de la ceinture dans le couloir (3).

4. Butée de tension selon l'une des revendications 1 à 3, caractérisée en ce que la pièce de support (2) coopère avec une pièce de blocage (12) constituée par un coulisseau monté mobile en translation dans la direction de coulissement de la ceinture dans le couloir (3) et comportant, en regard de la face interne de l'embase de la pièce de support, une face d'appui (18) inclinée par rapport à la face interne de l'embase (4), de manière à donner à l'épaisseur du coulisseau une forme convergente vers l'intérieur du support.

5. Butée de tension selon la revendication 4, caractérisée en ce que la pièce de support (2) délimite, dans ses bords (5-6) parallèles, deux rainures (13-14) parallèles à la direction de coulissement de la ceinture et coopérant avec des saillies complémentaires (15-16) portées par la pièce de blocage (12).

6. Butée de tension selon l'une des revendications 1 à 3, caractérisée en ce que la pièce de support (2) coopère avec une pièce de blocage (12) constituée par une plaquette circulaire (24) montée dans la pièce de support de manière à tourner sur son axe qui est perpendiculaire au fond du couloir (3), ladite plaquette comportant, au niveau de sa face supérieure, des rampes inclinées (26) destinées à coopérer avec des rebords (22-23) prolongeant les bords (5-6) de la pièce de support et provoquant le déplacement de ladite plaquette sur son axe, soit en engagement, soit en effacement par rapport au couloir (3).

**Claims**

1. Tension stop member for safety belt of the type with winder comprising, on the one hand, a supporting member (2) defining a passageway (3) for a belt (1) and, on the other hand, a movable locking piece (12) adapted to entirely clear the passageway or to penetrate into the latter to tightly grip the belt against the supporting member, characterised in that :
— the supporting member (2) is U-shaped and comprises a base (4) and two raised edges (5-6) defining with the base the passageway (3), the said edges being provided with means (13-14 or 22-23) for holding and guiding the locking piece (12),
— the locking piece is constituted of a plate (12) comprising :
means (15-16 or 26) complementary to the holding and guiding means (13-14 or 22-23),
a resting and gripping face (18 or 25) oriented towards the base,
a face opposite the resting face and provided with and actuating member (17).

2. Tension stop member according to claim 1, characterised in that the supporting member (2) defines a passageway (3), the state of surface of which creates, at least level with the base, a friction coefficient with respect to the material constituting the belt.

3. Tension stop member according to claim 1 or 2, characterised in that the supporting member (2) comprises, for abutment against the aperture through which the belt (1) emerges, a transverse edge (2a) which is inclined with respect to the perpendicular to the sliding axis of the belt in the passageway (3).

4. Tension stop member according to any one of claims 1 to 3, characterised in that the supporting member (2) cooperates with a locking piece (12) consisting of a sliding block mounted to move in translation in the sliding direction of the belt inside the passageway (3) and comprising, opposite the internal face of the base of the supporting member, a resting face (18) inclined with respect to the internal face of the base (4) so as to confer to the thickness of the sliding block a shape converging inwardly to the support.

5. Tension stop member according to claim 4, characterised in that the supporting member (2) defines, inside its parallel edges (5-6), two grooves (13-14) parallel to the sliding direction of the belt and cooperating with complementary projections (15-16) carried by the locking piece (12).

6. Tension stop member according to any one of claims 1 to 3, characterised in that the supporting member (2) cooperates with a locking piece (12) consisting of a circular plate (24) mounted in the supporting member so as to rotate about its axis which is perpendicular to the base of the passageway (3), the said plate comprising, level with its upper face, inclined ramps (26) designed to cooperate with flanges (22-23) extending from the edges (5-6) of the supporting member and causing the said plate to axially engage in or retract from the passageway (3).

**Ansprüche**

1. Spannungsanschlag für einen Sicherheitsgurt mit Aufrollautomatik, der einerseits ein die Durchführung (3) eines Gurtes (1) begrenzendes Trägerstück (2) und andererseits ein bewegliches Blockierglied (12) aufweist, das die Durchführung ganz freigeben oder in sie eindringen kann, um den Gurt einzuklemmen und gegen das Trägerstück zu pressen, dadurch gekennzeichnet, daß
— das Trägerstück (2) U-förmig ausgebildet ist, mit einer Grundplatte (4) und zwei hochgebogenen Rändern (5-6), die mit der Grundplatte (4) zusammen die Durchführung (3) begrenzen, wobei die Ränder mit Mitteln (13-14 oder 22-23) zum Haltern und Führen des Verriegelungsteils (12) versehen sind,

— das Blockierglied aus einer Platte (12) besteht, die

zu den Halterungs- und Führungsmitteln (13-14 oder 22-23) komplementäre Mittel (15-16 oder 26)

eine Andruckseite (18 oder 25) zum Klemmen und Pressen gegen die Grundplatte, und

eine der Andruckseite gegenüberliegende, mit einem Bedienungsgriff (17) versehenen Seite aufweist.

2. Spannungsanschlag nach Anspruch 1, dadurch gekennzeichnet, daß das Trägerstück (2) eine Durchführung (3) begrenzt, die zumindest im Bereich der Grundplatte eine Oberflächenbeschaffenheit aufweist, die gegenüber dem Gurtmaterial Reibung erzeugt.

3. Spannungsanschlag nach Anspruch 1 oder 2, dadurch gekennzeichnet, daß das Trägerstück (2) eine senkrechte Kante (2a) zum Andrücken des Gurtes (1) gegen die Durchführung aufweist, die relativ zur Senkrechten auf der Gleitachse des Gurts in der Durchführung (3) abgeschrägt ist.

4. Spannungsanschlag nach einem der Ansprüche 1 bis 3, dadurch gekennzeichnet, daß das Trägerstück (2) mit einem Blockierglied (12) zusammenwirkt, das aus einem in Richtung der Gurtbewegung in der Durchführung (3) verschiebbar angeordneten Schieber besteht und gegenüber der Innenseite der Grundplatte des Trägerstücks eine Andruckseite (18) aufweist, die, relativ zur Innenseite der Grundplatte (4), so abgeschrägt ist, daß die Dicke des Schiebers zum Inneren des Trägerstücks hin abnimmt.

5. Spannungsanschlag nach Anspruch 4, dadurch gekennzeichnet, daß das Trägerstück (2) in seinen parallelen Rändern (5-6) zwei zur Gleitrichtung des Gurts parallele Nute (13-14) festlegt, die mit den komplementären Vorsprüngen (15-16) des Verriegelungsteils (12) zusammenwirken.

6. Spannungsanschlag nach einem der Ansprüche 1 bis 3, dadurch gekennzeichnet, daß das Trägerstück (2) mit einem, aus einer runden Scheibe (24) bestehenden, im Trägerstück angebrachten Verriegelungsteil (12) zusammenwirkt, das sich um seine zum Boden der Durchführung (3) senkrechte Achse dreht, wobei die Scheibe auf der Höhe ihrer oberen Seite schräge Rampen (26) aufweist, die mit den Rändern (5-6) des Trägerstücks verlängernden Handleisten zusammenwirken und eine Verschiebung der Scheibe längs ihrer Achse entweder greifend oder lösend, relativ zur Durchführung, bewirken.

Fig-1

Fig-3

Fig-4

Fig-2

Fig-6

Fig-5

Fig-7

Fig-8